# EUROPEAN PATENT APPLICATION

(11) **EP 0 748 711 A1**
(43) Date of publication of application: **18.12.1996**
(21) Application number: 96301605.0
(22) Date of filing: 08.03.1996
(51) Int. Cl.: B60J 10/00, B60J 10/08

(54) **Reinforcements for sealing, trimming and finishing strips and methods of making such reinforcements**

(30) Priority: 12.06.1995 GB 9511882
(71) Applicant: DRAFTEX INDUSTRIES LIMITED, Edinburgh EH3 6YY, Scotland (GB)
(72) Inventor: Gommier, Herve, 28120 Meslay le Grenet (FR)
(74) Representative: Foster, David Martyn

(57) **Abstract**

A reinforcing metal carrier for a generally channel-shaped sealing, trimming or finishing strip is produced from a thin longitudinally extending metal blank. Slots (52) are produced in the blank to increase its flexibility. In addition, slits (62) are provided at intervals so that one channel wall in the carrier comprises bent-up portions (58) separated by air gaps (59). From each air gap (59), metal portions (62) extend outwardly of the channel and then have distal regions (64) bent upwardly. These outwardly and upwardly extending regions (62,64) reinforce a sideways extension of the finished strip, such as a sideways extension forming a so-called "cosmetic lip". Other shapes of carrier can be formed in the same way.

## Description

The invention relates to a reinforcing carrier for reinforcing a sealing, trimming or finishing strip having a generally channel-shaped portion and at least one extension outwardly of the channel-shaped portion, the carrier comprising stiff resilient material defining the base and two side walls of a channel which matches the channel-shaped portion of the strip, the stiff resilient material of the carrier also defining integral outward portions extending outwardly of the channel of the carrier in the same direction from one said side wall and alternating along the length of the channel of the carrier with gaps between them.

The invention also relates to a method of making a channel-shaped reinforcing metal carrier for a generally channel-shaped sealing, trimming or finishing strip, comprising the steps of bending portions of metal out of an initial plane and generally transverse to the plane so as to provide respective side walls of the channel of the carrier, the metal remaining in the plane between the side walls forming the base of the channel, forming slits in the metal at intervals along at least one side wall of the carrier, and forming integral outward portions of the metal extending outwardly through gaps which are positioned between pairs of the slits.

Such a reinforcing carrier, and such a method, are known from US-A-4 678 696. In this known carrier and known method, a longitudinal metal blank is formed with transverse slots extending inwardly of the blank from opposite longitudinal edges for approximately one-third of the width of the blank. The middle third of the blank is provided with corresponding transverse slots, these slots being separated from the edge slots by two parallel unslotted portions of the metal extending along the length of the blank. The metal between the slots of one outside third of the blank is bent upwardly to form one side of the channel of the carrier. Along the middle third of the blank, the metal between some of the slots is cut through and bent upwardly to form the opposite side of the channel of the carrier. The metal of the middle third of the blank which is not cut through in this way supports the opposite third of the blank and the metal between the latter's slots is bent upwardly to form the integral outward portions of the carrier for reinforcing the outward extension of the strip. This known form of carrier is complex in construction and manufacture. The support for the integral outward portions of the carrier is weak. Furthermore, the method of producing it is inflexible: if the carrier is to have a different form (if, for example, the integral outward portions are to be supplemented by similar portions along the opposite side of the carrier or if they are to have a different size), a correspondingly different pattern of slots has to be cut in the initial blank, and this may involve the use of a modified tool. The invention aims to overcome these problems.

According to the invention, therefore, the known carrier is characterised in that the integral outward portions are respectively aligned with the gaps in the said one side wall, the integral outward portions having been bent outwardly from the said one side wall thereby forming the said gaps and being positioned for reinforcing the said outward extension of the strip.

According to the invention, the known method is characterised in that the step of forming the channel of the carrier comprises the steps of forming a thin longitudinally extending initially planar metal blank, forming the slits to extend widthwise of the blank from one of the longitudinal edges thereof at predetermined positions which slits extend for part, only, of the width of the blank, bending portions of the metal between some of the adjacent slits out of the plane of the blank and in the same direction so that these portions are separated along the length of the blank by the said gaps and define the said one side wall of the channel of the carrier, the portions of metal corresponding to the gaps extending outwardly of the channel in the same direction to form the said integral outwardly extending portions, and bending the metal of the blank to form the other side wall of the channel.

Reinforcing metal carriers embodying the invention, sealing, trimming or finishing strips embodying the invention and incorporating such carriers and for use in motor vehicle body construction, and methods according to the invention of making such carriers and strips, will now be described, by way of example only, with reference to the accompanying diagrammatic drawings in which:
Figure 1 is a perspective view of one of the sealing, trimming or finishing strips; and
Figure 2 shows another of the sealing, trimming or finishing strips in cross-section;
Figure 3 is a perspective view of one of the metal carriers, suitable for incorporation in the strip of Figure 1;
Figure 4 is a perspective view corresponding to Figure 3 but showing one of the metal carriers suitable for incorporation in a modified form of the sealing strip of Figure 2; and
Figure 5 is a perspective view of another of the metal carriers.

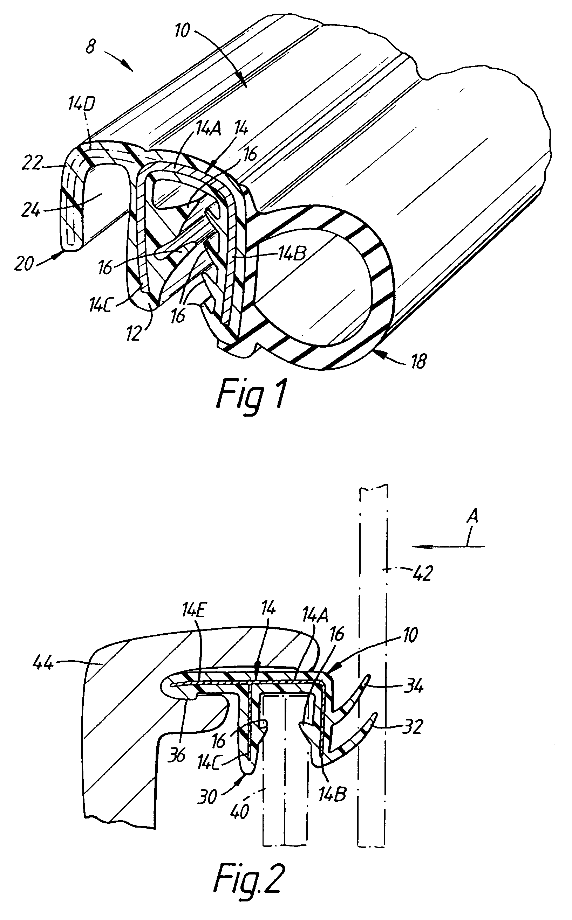

The sealing, trimming or finishing strip 8 shown in Figure 1 comprises a main or gripping section 10 which is channel-shaped and comprises extruded material, such as plastics or rubber material 12, covering an embedded channel-shaped metal reinforcing core or carrier 14. The extruded material 12 is extruded so as to provide integral gripping lips 16 which extend along the channel on opposite inside facing walls. There may be more or fewer lips than shown and the lips do not have to have the same size or be of the same number on opposite facing walls.

On the outside of one of the walls of the gripping portion 10, a sealing section 18 is provided. This is generally tubular in form, but may take any other suitable form. It is advantageously made of soft flexible material such as cellular rubber. It may be made separately and then attached to the gripping section 10 as by adhesive. Instead, the material of the sealing section 18 may be extruded integrally with the matterial 12.

On the opposite outside wall of the gripping section 10, a lip 20 is provided, termed a "cosmetic lip". The lip 20 comprises extruded material 22 which is preferably extruded integrally with the material 12. The cosmetic lip 20 defines a channel 24 and is reinforced by an extension 14D of the metal carrier 14. As will be explained in more detail, the extension 14D is discontinuous along the length of the carrier and is therefore shown dotted in Figure 1. The extension 14D of the carrier 14 extends from the side wall 14C of the carrier, the carrier also comprising the (inverted) base 14A and the opposite side wall 14B. The metal carrier 14 will be described in more detail below It is preferably incorporated into the extruded material 12,22 by means of a known cross-head extrusion process.

In use, the strip 8 of Figure 1 is used for providing a seal around a door opening in a motor vehicle body. The gripping section 10 mounts the strip 8 on a mounting flange which runs around the door opening and lies generally in the plane of the door opening, the flange being formed where the inner and outer body panels meeting at the door opening are welded together. The gripping section 10 embracingly grips this flange and holds the strip 8 securely in position. The resilience imparted to the extruded material 12 by the embedded metal carrier 14 helps to secure the gripping section 10 in position. This process is also assisted by the gripping lips 16 which frictionally grip the sides of the flange. Their frictional grip may be increased by making them of material which is relatively soft, and preferably softer than the remainder of the extruded material 12.

The gripping section 10 mounts the strip 8 on the flange so that the sealing section 18 is supported to run around the outside of the door opening and thus to be contacted, and partially compressed by, the closing door. In this way, the sealing section 18 provides a weather-proof seal around the door.

In addition, the cosmetic lip 20 is supported so as to run around the inside of the door opening. It thus positions the channel 24 around the door opening, the channel 24 being used to receive, grip and hold the edge of the interior body trim around the door opening.

The sealing, trimming or finishing strip 30 shown in Figure 2 has similarities with the strip 8 and items performing the same function are correspondingly referenced.

In the strip 30, the gripping section 10 is of generally the same construction as in the strip 8 of Figure 1, but, in this case, only two gripping lips 16 are shown.

The sealing section 18 of the strip 8 is replaced by two flexible lips 32 and 34.

The cosmetic lip 20 of the strip 8 is replaced by a sideways-extending lip 36 which is reinforced by a sideways-extension 14E of the metal carrier 14.

The sealing strip 30 may also be manufactured by a known cross-head extrusion process.

As shown in Figure 2, the sealing strip 30 may be mounted on a mounting flange 40 in generally the same fashion as the strip 8, the gripping section 10 embracing the flange 40, the strip being held in position by the combined effects of the resilience of the metal carrier 14 and the frictional grip of the lips 16. The flange 40 may be the metal flange surrounding a window opening in a motor vehicle body, the flange being formed where the inner and outer body panels at the window opening are brought together and welded to each other.

The gripping section 10 in the strip 30 supports the strip 30 so that the lips 32,34 run around the outside of the window opening and seal against a closing window glass 42. Such an arrangement is particularly suitable for the case where the window glass is hinged so as to move in the direction of the arrows A; an example of such a window glass is the window glass in the rear side window of a two-door vehicle.

The gripping section 10 of the strip 30 thus mounts the lip 36 to run around the inside of the vehicle body where it supports a portion of the interior vehicle trim 44 in the manner shown.

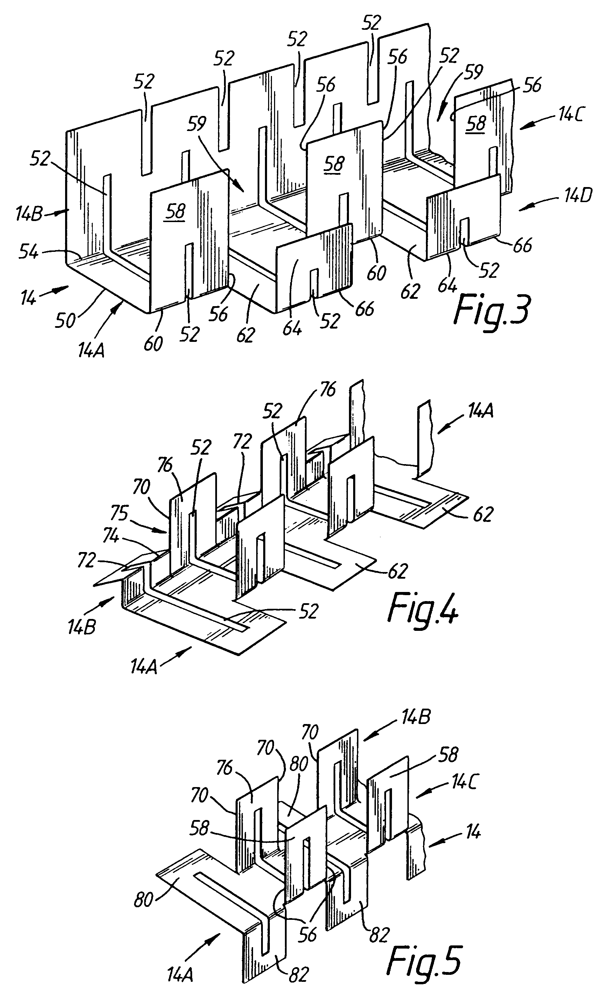

Figure 3 shows a perspective view of the metal carrier 14 for use in the sealing strip 8 of Figure 1. As shown, it comprises an integral metal sheet 50 which is provided with through slots 52. It is bent substantially along a first fold line 54 to provide the side wall 14B for the carrier (see Figure 1).

On the opposite edge of the carrier 14 shown in Figure 3, the carrier is slit along lines 56 regularly spaced along the length of the carrier. In this way, separated portions 58 are bent upwardly along fold lines 60 to form the wall 14C of the carrier 14 of Figure 1. This wall 14C will thus consist of the upstanding portions 58 regularly separated by gaps 59 between them where the material of the carrier has not been bent upwardly. The portions 62 from these gaps, and which have not been bent upwardly, extend outwardly in the plane of the base 14A of the channel and their distal ends are then bent upwardly at 64, along fold lines 66. These upwardly bent portions 64 provide the outer extension 14D of the carrier 14 shown in Figure 1. Again, this extension 14D will thus consist of the upwardly bent portions 64 separated by gaps between them.

In use, the carrier 14 shown in Figure 3 is incorporated into the extruded material of the strip of Figure 1 by the known cross-head extrusion process referred to above.

It will be appreciated that the carrier 14 for the sealing strip 30 of Figure 2 can be constructed in the same way as shown in Figure 3, except that the distal regions 64 of the portions 62 of the carrier would not be bent upwardly but would be left to extend outwardly in the same plane as the portions 62.

Figure 4 shows another form of carrier. Items corresponding to those in Figure 3 are similarly referenced. The carrier shown in Figure 4 is modified in that slits 70 are provided which enable portions 72 of the carrier along the side 14B to be bent outwardly and downwardly along fold lines 74 to provide short gaps 75 between upstanding portions 76 which form the main part of the wall 14B.

Along the opposite side wall 14C of the carrier, the portions 62 extend outwardly in the same plane as the base portion 14A of the carrier.

The carrier shown in Figure 4 would be suitable for incorporation in a modified form of the sealing strip 30 of Figure 2. In this modified form, one of the sealing lips 32,34 would be reinforced with the outwardly bent carrier portions 72 (Figure 4).

It will be apparent that many other different forms of carrier may be produced in the same general manner, to suit different sealing strip requirements. Merely as an example, one such other form of carrier is shown in Figure 5. In this example, both side walls of the carrier are provided with slits 56,70 which extend for the full height of each side wall. Therefore, each of the opposite side walls 14B,14C of the carrier is made up of upstanding portions 58,76 respectively. Along the side wall 14B of the carrier, the portions 76 alternate with portions 80 which extend outwardly in the plane of the base 14A of the carrier. Along the side wall 14C of the carrier, the upstanding portions 58 alternate with portions 82 which are bent downwardly.

The carrier shown in Figure 5 would be incorporated into extruded material by means of a cross-head extruder so as to provide the desired reinforcement of particular regions of the extruded material.

The carriers illustrated can be manufactured by forming slits through a flat metal blank along those regions where the slots 52 in the finished carrier are required. The metal blank can then be subjected to a thinning-down process which stretches the metal of the blank lengthwise and converts these slits into the slots 52. Thereafter, the slits 56,70 can be formed at the appropriate positions and with the appropriate lengths.

The carrier is then subjected to a metal forming process which bends it into the required final shape, the upstanding portions being bent upwardly along the fold lines 54,60,66,74 accordingly.

The metal carriers illustrated are advantageous as compared with known forms of carrier for achieving the same purpose. Thus, in order to produce a metal carrier of channel-shape but with an extension sideways of the channel (such as the sideways extensions 14D and 14E of Figures 1 and 2), it is known to provide a metal blank of extra width sufficient to enable the metal to be bent upwardly to form the channel wall 14C, then bent downwardly from the distal edge of the wall 14C and finally bent outwardly to form the portion 14D or 14E. Although this process enables the carrier to be produced from a single metal blank, it is disadvantageous because the wall 14C of the gripping section 10 is of double thickness, the production process necessarily requiring the metal to be bent back on itself. This double thickness is disadvantageous because it increases cost and weight, and also substantially and disadvantageously increases the stiffness of the wall 14C. These disadvantages are avoided by the carrier constructions described and illustrated above. There is no, or substantially no, additional metal used in order to provide the extended portions such as the portions 14D and 14E. At the same time, though, the gaps alternating along the length of the carrier between the outwardly and/or upwardly extending carrier portions (such as the carrier portions 58,62,76,78) do not adversely affect the reinforcing capabilities of the carrier or its flexibility.

The slots 52 in the carrier ensure that the carrier is sufficiently flexible to enable the sealing strip in which it is incorporated to be readily bent to follow curves or corners in the door or other opening in the vehicle to which it is to be fitted.

## Claims

1. A reinforcing carrier (14) for reinforcing a sealing, trimming or finishing strip (8) having a generally channel-shaped portion (10) and at least one extension (20) outwardly of the channel-shaped portion (10), the carrier (8) comprising stiff resilient material defining the base (14A) and two side walls (14B,14C) of a channel which matches the channel-shaped portion (10) of the strip (8), the stiff resilient material of the carrier (8) also defining integral outward portions (62,72,80,82) extending outwardly of the channel of the carrier (8) in the same direction from one said side wall (14B,14C) and alternating along the length of the channel of the carrier (8) with gaps (e.g. 5a) between them, characterised in that the integral outward portions (62,72,80,82) are respectively aligned with the gaps (e.g. 59) in the said one side wall (14B,14C), the integral outward portions (62,72,80,82) having been bent outwardly from the said one side wall (14B,14C) thereby forming the said gaps (e.g. 59) and being positioned for reinforcing the said outward extension (20) of the strip (8).

2. A carrier according to claim 1, characterised in that each integral outward portion (62) has a distal region (64) bent out of the plane of the outward portion (62), the distal regions all lying in the same general plane (14D).

3. A carrier according to claim 1 or 2, characterised by through slits or slots (52) extending transversely of the length of the carrier (14) to increase its flexibility.

4. A carrier according to any preceding claim, characterised in that at least part of each integral outward portion (62,80) extends generally parallel to the base (14A) of the channel.

5. A carrier according to any preceding claim, characterised in that at least part (82) of each integral outward portion (82) extends generally transverse to the base (14A) of the channel.

6. A carrier according to any preceding claim, characterised by further integral outward portions (72;80) extending outwardly of the channel of the carrier (14) all in the same direction from the other said side wall (14B) of the carrier and spaced apart from each other along the length of the carrier (14), these other integral outward portions (72,80) having been bent outwardly from the other side wall (14B) thereby forming the respective gaps (e.g. 75).

7. A sealing, trimming or finishing strip (8) having a generally channel-shaped portion (10) and at least one extension (20) outwardly of the channel-shaped portion (10), characterised in that the channel-shaped portion (10) and the extension (20) are reinforced by a carrier according to any preceding claim.

8. A method of making a channel-shaped reinforcing metal carrier (14) for a generally channel-shaped sealing, trimming or finishing strip (8), comprising the steps of bending portions of metal out of an initial plane and generally transverse to the plane so as to provide respective side walls (14B,14C) of the channel of the carrier (14), the metal remaining in the plane between the side walls (14B,14C) forming the base (14A) of the channel, forming slits (56) in the metal at intervals along at least one side wall (14C) of the carrier, and forming integral outward portions (62) of the metal extending outwardly through gaps (e.g. 59) which are positioned between pairs of the slits (56), characterised in that the step of forming the channel of the carrier (14) comprises the steps of forming a thin longitudinally extending initially planar metal blank (50), forming the slits (56) to extend widthwise of the blank from one of the longitudinal edges thereof at predetermined positions which slits (56) extend for part, only, of the width of the blank, bending portions (58) of the metal between some of the adjacent slits (56) out of the plane of the blank (50) and in the same direction so that these portions (58) are separated along the length of the blank by the said gaps (59) and define the said one side wall (14C) of the channel of the carrier (14), the portions of metal (62) corresponding to the gaps (59) extending outwardly of the channel in the same direction to form the said integral outwardly extending portions (62), and bending the metal of the blank to form the other side wall (14B) of the channel.

9. A method according to claim 8, characterised by the step of bending a distal region (64) of at least some of the integral outwardly extending portions (62), each such distal region (64) being bent in the same direction as each other.

10. A method according to claim 8 or 9, characterised by the step of forming slits (70) in the metal of the blank on the other side wall (14B) of the channel, these slits (70) being parallel to the slits (56) in the said one side wall (14C), and bending the metal between at least some of the pairs of slits (70) in the other side wall (14B) outwardly of the channel to form integral outward portions (72) on that side wall (14B) of the channel and also forming gaps (75) in that side wall (14B).

11. A method according to claim 10, characterised in that the slit (70) in the other side wall (14B) of the channel extend from the distal edge of the metal to points spaced from the base (14A) of the channel.

12. A method according to any one of claims 8 to 11, characterised by the step of providing through slits or slots (52) extending at least partly across the width of the blank to increase its flexibility.

13. A method according to any one of claims 8 to 12, characterised by the step of embedding the metal carrier (14) in extruded plastics or rubber material (12) to form the said strip (8).
